# EUROPEAN PATENT APPLICATION

(11) **EP 3 252 186 A1**
(43) Date of publication of application: **06.12.2017**
(21) Application number: 16172642.7
(22) Date of filing: 02.06.2016
(51) Int. Cl.: C25B 1/00

(54) **A PHOTOELECTROCHEMICAL CELL ARRANGEMENT**

(71) Applicant: Dyenamo AB, 114 28 Stockholm (SE)
(72) Inventor: HAINING, Tian, 170 73 SOLNA (SE)
(74) Representative: Awapatent AB

(57) **Abstract**

The present invention relates to a photoelectrochemical cell arrangement. The photoelectrochemical cell arrangement comprises a first unit and a second unit. Each of the first and second units comprises a respective chamber for holding a respective electrolyte, a respective light window enabling light to be transmitted into the respective chamber, a respective photoactive electrode arranged to receive the light transmitted through the respective light window, and a respective aperture configured to adjust the amount of light transmitted through the respective light window.

The photoactive electrode in the first unit is attached to the light window in the first unit, the photoactive electrode in the second unit is attached to the light window in the second unit.

## Description

### Technical field of the Invention

The present invention relates to photoelectrochemical cell arrangement, and to a system comprising such photoelectrochemical cell arrangement and at least one light source.

### Background of the Invention

Photoelectrochemical cells, or PECs, are solar cells or solar fuels, that produce electrical energy and/or production gases. A photoelectrochemical cell typically comprises an electrolyte, and two electrodes wherein at least one of the electrodes is a photoactive electrode.

For example, if the electrolyte is water, the photoactive electrode is acting as anode (i.e. a photoanode capable of producing electrons by harvesting energy from the light) and the counter electrode is made of e.g. stainless steel (and thus acting as a cathode), the photoelectrochemical cell may split water into hydrogen gas and oxygen gas. In more detail, but still in a somewhat simplified manner, the process can be described as follows. Incoming light (typically sunlight) excites electrons in the photoactive electrode. As the photoanode is electrically connected to the counter electrode, preferably by an electric wire, the electrons are allowed to flow through the electric wire to the counter electrode. At the counter electrode, the electrons react with water molecules in the electrolyte to form hydrogen and OH groups (i.e. the water is reduced). The OH groups flow through the electrolyte to the surface of the photoactive electrode where they react with holes associated with the excited electrons, to form oxygen (and water molecules). The above procedure is continuous as long as the illumination of the photoactive electrode is ongoing.

Furthermore, certain types of photoelectrochemical cells divide the electrolyte into at least two chambers, wherein each chamber is associated with one of the electrodes. The chambers are typically separated from each other by means of a membrane allowing ions to pass there-through. Such set-up enables the different gases formed in the electrolyte to be held separated from each other.

Different types of photoactive material may be used in the electrode. For example, a material being a semiconductor may be used, or a dye sensitized material typically associated with a catalyst. Furthermore, both electrodes, i.e. both the anode and the cathode of the photoelectrochemical cell may be photoactive, and thus provide for a so called dual photoelectrode-photoelectrochemical cell. Such example is shown in the article "Organic Dye-Sensitized Tandem Photoelectrochemical Cell for Light Drive Total Water Splitting" by Fusheng et al. The article discloses light driven water splitting in a dye-sensitized photoelectrochemical cell with two photoactive electrodes. The photoanode is constituted by an organic dye L0 as photosensitizer and a Ruthenium molecular complex Ru1 as water oxidation catalyst on meso-porous TiO2. The photocathode is constructed with an organic dye P1 as photoabsorber and a Cobolt-based molecular complex Co1 as hydrogen generation catalyst on nanostructured NiO. By combining the photocathode and the photoanode, the PEC split water by visible light under neutral pH conditions without applying any bias.

However, a problem with photoelectrochemical cells where both the anode and the cathode is photoactive (i.e. a photoanode and a photocathode) is that the energy gap of the photoanode should match the energy gap of the photocathode. Thus, testing equipment exist where the photoactive material in the electrodes can be tested and evaluated against e.g. theoretical calculated values. However, various unknown parameters, such as e.g. that it is difficult to ensure that the photoanode and the photocathode is exposed to illumination with the same light intensity, complicates the such testing and evaluation procedure.

There is thus a need in the industry for a photoelectrochemical cell which can be used to test and evaluate the photoactive material in a more precise manner.

### Summary of the Invention

It is an object of the present invention to improve the current state of the art, to at least partly solve the above problems, and to provide a photoelectrochemical cell which at least enables improved testing and evaluation of the photoactive material in the electrodes. These and other objects are achieved by a photoelectrochemical cell arrangement, and a system comprising such photoelectrochemical cell arrangement and at least a light source.

According to a first aspect of the present invention, a photoelectrochemical cell arrangement is provided. The photoelectrochemical cell arrangement comprises:
a first unit comprising a first chamber for holding a first electrolyte, a first light window enabling light to be transmitted into said first chamber, a first photoactive electrode arranged to receive the light transmitted through said first light window, and a first aperture configured to adjust the amount of light transmitted through said first light window;
a second unit comprising a second chamber for holding a second electrolyte, a second light window enabling light to be transmitted into said second chamber, a second photoactive electrode arranged to receive the light transmitted through said second light window, and a second aperture configured to adjust the amount of light transmitted through said second light window;
an ion exchange membrane separating said first chamber from said second chamber, said ion exchange membrane being at least partly light transmitting to enable light transmitted through said first light window to reach said second photoactive electrode, and to enable light transmitted through said second light window to reach said first photoactive electrode;
wherein said first photoactive electrode is attached to said first light window, and is configured to be in electrochemical contact with the first electrolyte, and wherein said second photoactive electrode is attached to said second light window, and is configured to be in electrochemical contact with the second electrolyte.

Hereby, unknown parameters, or parameters which are difficult to assess, when testing and evaluating the material of the photoactive electrodes are reduced compared to prior art techniques. For example, the first and the second light windows with the associated first and second apertures enable the photoelectrochemical cell arrangement to be used in various configurations where the first and the second photoactive electrodes may be illuminated from different sides of the photoelectrochemical cell arrangement.

Having two light windows, i.e. the first light window associated with the first photoactive electrode, and the second light window associated with the second photoactive electrode, the direction of illumination of the photoelectrochemical cell arrangement may simply be switched (e.g. if the photoelectrochemical cell arrangement is only illuminated from one side). In the other words, this facilitates testing on either or both of the photoelectrodes for dual photoelectrodes system, without the need of rearrangement of the photoelectrodes. This may speed up the testing and evaluation process, as the photoactive material needs not to be re-arranged within the cell.

The first and the second apertures enable a prices control of the illumination through the first and the second light windows, respectively. It should be understood that both the first aperture and the second aperture are configured to adjust the amount of light transmitted through them. Thus, the first and the second apertures have a respective light-through area (or opening) which may be varied in size. For example, by adjusting the light-through area of the respective first and second apertures, the light transmitted to the respective first and second light windows may be precisely controlled. Hereby, the parameter of undesired light intensity difference between the first and the second photoactive electrode can be better accounted for, or even removed. For example, the light-through area of the respective first and second apertures may equal.

Moreover, by having the first photoactive electrode attached to the first light window, and the second photoactive electrode attached to the second light window, parameters related to light scattering may be better accounted for, or even removed. Furthermore, by having the first photoactive electrode attached to the first light window, and the second photoactive electrode attached to the second light window, the number of barriers through which the lights needs to pass in the cell, is reduced.

According to at least one example embodiment, of the photoelectrochemical cell arrangement is configured as a material testing equipment (and may thus be referred to a material testing equipment). Thus, the photoelectrochemical cell arrangement may be described as having a particular design which facilitates testing, measuring and evaluation of material within the photoelectrochemical cell, such as e.g. the material of the first and the second photoactive electrodes.

It should be understood that by electrochemical contact between said first photoactive electrode and the first electrolyte, and electrochemical contact between said second photoactive electrode and the second electrolyte, electrochemistry of the respective electrolyte can be achieved (i.e. oxidation and reduction of the electrolyte). Thus, electrons and holes (or alternatively negatively charged ions and positively charged ions) may be transferred from the respective first and second photoactive electrode to the respective first and second electrolyte.

According to at least one example embodiment, the first and the second electrolytes are similar, or the same. According to at least one example embodiment, the first and the second electrolytes are different, e.g. comprising different type of fluids. According to at least one example embodiment, at least one of the first and the second electrolytes are water.

According to at least one example embodiment, said first light window and said second light window are aligned on an optical axis.

Hereby, the light pass from the light path of the light transmitted through the first light window, pass the first photoactive electrode, into the first chamber and through the first electrolyte, thereafter through the ion exchange membrane and into the second chamber and through the second electrolyte, may be better controlled. Correspondingly, the light path of the light transmitted through the second light window, pass the second photoactive electrode, into the second chamber and through the second electrolyte, thereafter through the ion exchange membrane and into the first chamber and through the first electrolyte to the first photoactive electrode, may be better controlled. Hereby, unknown parameters originating from misalignment (such as light scattering or too large intensity losses) may be better accounted for, or even reduced.

According to at least one example embodiment, said first light window and said second light window are aligned on a horizontal axis.

In such set-up, the first unit and the second unit are arranged side-by-side with the respective first and second light windows being arranged to receive and transmit horizontal light. In other words, the first and the second light windows are for such embodiments vertically arranged.

According to at least one example embodiment, said first chamber is defined by first chamber walls, and wherein at least a portion of said first chamber walls is defined by said first light window.

That is, the first light window forms at least a part of the containment of the first chamber. According to at least one example embodiment, the first aperture is configured to hold the first light window in positions relative the first chamber, for example by pressing the first light window towards a first unit body at least partly surrounding the first chamber.

According to at least one example embodiment, said second chamber is defined by second chamber walls, and wherein at least a portion of said second chamber walls is defined by said second light window.

That is, the second light window forms at least a part of the containment of the second chamber. According to at least one example embodiment, the second aperture is configured to hold the second light window in positions relative the second chamber, for example by pressing the second light window towards a second unit body at least partly surrounding the second chamber.

According to at least one example embodiment, the first light window comprises an inner side and an outer side, wherein said inner side is facing the first chamber. According to at least one example embodiment, the second light window comprises an inner side and an outer side, wherein said inner side is facing the second chamber.

Thus, the first photoactive electrode may be described as being attached to the inner side of the first light window, and the second photoactive electrode may be described as being attached to the inner side of the second light window.

According to at least one example embodiment, said first photoactive electrode is attached to said first light window (e.g. the inside of the first light window) by a sputtering technique, by sintering or by sensitization. According to at least one example embodiment, said second photoactive electrode is attached to said second light window (e.g. the inside of the second light window) by a sputtering technique, by sintering or by sensitization.

According to at least one example embodiment, said first photoactive electrode is laminated on the inside of the first light window. According to at least one example embodiment, said second photoactive electrode is laminated on the inside of the second light window.

According to at least one example embodiment, said first chamber and said second chamber are sealed.

That is, the first and the second chambers are sealed from the surroundings and may thus sealingly hold the respective first and second electrolytes. However, as previously discussed, the first chamber and the second chamber are in ionic contact with each other. Thus, ions may be exchanged between the first and the second electrolytes through the ion exchange membrane.

According to at least one example embodiment, the photoelectrochemical cell arrangement comprises the first electrolyte in the first chamber, and the second electrolyte in the second chamber.

According to at least one example embodiment, said first aperture, in a closed state, is configured to prevent light to be transmitted through said first light window, and wherein said second aperture, in a closed state, is configured to prevent light to be transmitted through said second light window.

Hereby, light transmitted into photoelectrochemical cell arrangement may be better controlled. For example, in a first configuration, both the first and the second apertures are arranged in an equal open state (i.e. the respective light-through areas of the first and the second apertures are the same) in which the first photoactive electrode mainly receives light through the first light window and secondly receives light which has been transmitted through second light window and through the ion exchange membrane. Correspondingly, in this first configuration the second photoactive electrode mainly receives light through the second light window and secondly receives light which has been transmitted through the first light window and through the ion exchange membrane. In other words, the photoelectrochemical cell arrangement is illuminated from both sides (i.e. the first side comprising the first light window, and the second side comprising the second light window) and the first and second apertures are open.

In a second configuration, the first aperture is arranged in a closed state while the second aperture is arranged in an open state allowing light to be transmitted there-through. In such configuration the first photoactive electrode only receives light transmitted through the first light window and through the ion exchange membrane, and the second photoactive electrode only receives light transmitted through the second light window.

In a third configuration, the first aperture is arranged in an open state, allowing light to be transmitted there-through while the second aperture is arranged in a closed state. In such configuration the first photoactive electrode only receives light through the first light window, and the second photoactive electrode only receives light transmitted through the first light window and through the ion exchange membrane.

Thus, if it is desirable to switch the direction of light illumination, the photoelectrochemical cell arrangement may simply be brought from the second configuration to the third configuration (or vice versa) by corresponding adjustments of the first and second apertures.

Thus, it should be understood that the first chamber is at least partly surrounded by a first unit body which is light impermeable, and that the second chamber is at least partly surrounded by a second unit body which is light impermeable. According to at least one example embodiment, the only (main) light inlets into the first and second chambers are the first and the second light windows.

According to at least one example embodiment, said first photoactive electrode comprises a p-type material and said second photoactive electrode comprises an n-type material.

In other words, the first photoactive electrode comprises first photoactive electrode material which may be a p-type material. The second photoactive electrode comprises second photoactive electrode material which may be an n-type material. Thus, the first photoactive electrode may be referred to as a p-type electrode, and the second photoactive electrode may be referred to as an n-type electrode.

The n-type material may e.g. comprise an n-type (organic) dye or an n-type semiconductor material. In the n-type material electrons are the majority charge carriers and holes the minority charge carriers, the "n" in n-type refers to the negative charge of the electron, e-. The p-type material may comprise a p-type (organic) dye or a p-type semiconductor material. In the p-type material holes are the majority charge carriers and electrons the minority charge carriers, the "p" in p-type refers to the positive charge of the hole, h+.

According to at least one example embodiment, said first photoactive electrode comprises a dye sensitized material, preferably a p-type dye. According to at least one example embodiment, said second photoactive electrode comprises a dye sensitized material, preferably an n-type dye.

The n-type material and the p-type material may have different band gaps (energy gaps), that is the n-type material and the p-type material may be configured to absorb light of different wavelengths. According to at least one example embodiment, the band gaps of the n-type material and the p-type material are overlapping. The n-type material and the p-type material may furthermore be comprised in the respective photoelectrodes without any dye and/or catalyst modification.

According to at least one example embodiment, the first photoactive electrode is a photoactive cathode, or a photocathode. According to at least one example embodiment, the second photoactive electrode is a photoactive anode, or a photoanode. According to at least one example embodiment, the first and the second electrolytes comprise water.

It should be understood that the ion exchange membrane is configured to enabling ions to pass from said first chamber to said second chamber, and from said second chamber to said first chamber.

According to at least one example embodiment, said ion exchange membrane is a proton exchange membrane.

Thus, protons are allowed to pass through the ion exchange membrane.

Additionally or alternatively, said ion exchange membrane is configured to enable transport of divalent ions. According to at least one example embodiment, the ion exchange membrane is configured to allow other monovalent ions compared to protons to be transported through the membrane.

According to at least one example embodiment, said first photoactive electrode is electronically connected to said second photoactive electrode, preferably by means of a connecting wire.

Thus, excited electrons from the second photoactive electrode may be transferred to the first photoactive electrode in order to e.g. participate in a reduction process of the first electrolyte.

According to at least one example embodiment, the photoelectrochemical cell arrangement further comprises a gas measurement unit fluidly connected to said first chamber and/or said second chamber.

Hereby, the any produced gas formed in the electrolyte (typically as a result of oxidation or reduction) may be analyzed. Preferably, the type of gas and the amount of gas can be measure by such device. According to at least one example embodiment, the first unit and the second unit comprise respective means for connecting the gas measurement unit (e.g. a respective closable opening).

According to at least one example embodiment, a system comprising a photoelectrochemical cell arrangement according to any one of the previously described embodiments, and a light source configured to emit light to said first aperture and/or said second aperture is provided.

According to at least one example embodiment, the light source is a first light source configured to emit light to said first aperture, and wherein said system further comprises a second light source configured to emit light to said second aperture.

The first and the second light sources may be configured to excite electrons in the respective first and second photoactive electrodes. That is, the wavelength of the light emitted by the first and the second light sources may be chosen to match the band gaps of the photoactive material in the respective first and second photoactive electrodes. According to at least one example embodiment, the first and the second light sources are configured emit light of the same wavelength and/or the same intensity.

According to at least a second aspect of the present invention, a photoelectrochemical cell arrangement system is provided. The photoelectrochemical cell arrangement system comprises at least a first photoelectrochemical cell arrangement according to the first aspect of the present invention, and at least a second photoelectrochemical cell arrangement. The second photoelectrochemical cell arrangement may be structurally and functionally the same (or similar) to the first photoelectrochemical cell arrangement. Thus the second photoelectrochemical cell arrangement may comrise first and second light windows.

According to at least one example embodiment, the first photoelectrochemical cell arrangement and the second photoelectrochemical cell arrangement are arranged side-by-side in such a way that the first and second ligth windows of the first photoelectrochemical cell arrangement are optically aligned with the first and second ligth windows of the second photoelectrochemical cell arrangement. In other words the first and the second light windows of the respective photoelectrochemical cell arrangements are aligned on an optical axis.

Hereby ligth from one and the same ligth source may be used in the photoelectrodes in the first and second ligth windows of the first photoelectrochemical cell arrangement as well in the first and second light windows of the second photoelectrochemical cell arrangement.

Effects and features of this second aspect of the present invention are largely analogous to those described above in connection with the first aspect of the inventive concept. Embodiments mentioned in relation to the first aspect of the present invention are largely compatible with the second aspect of the invention.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief description of the drawings

The above objects, as well as additional objects, features and advantages of the present invention, will be more fully appreciated by reference to the following illustrative and non-limiting detailed description of various embodiments of the present invention, when taken in conjunction with the accompanying drawings, wherein:

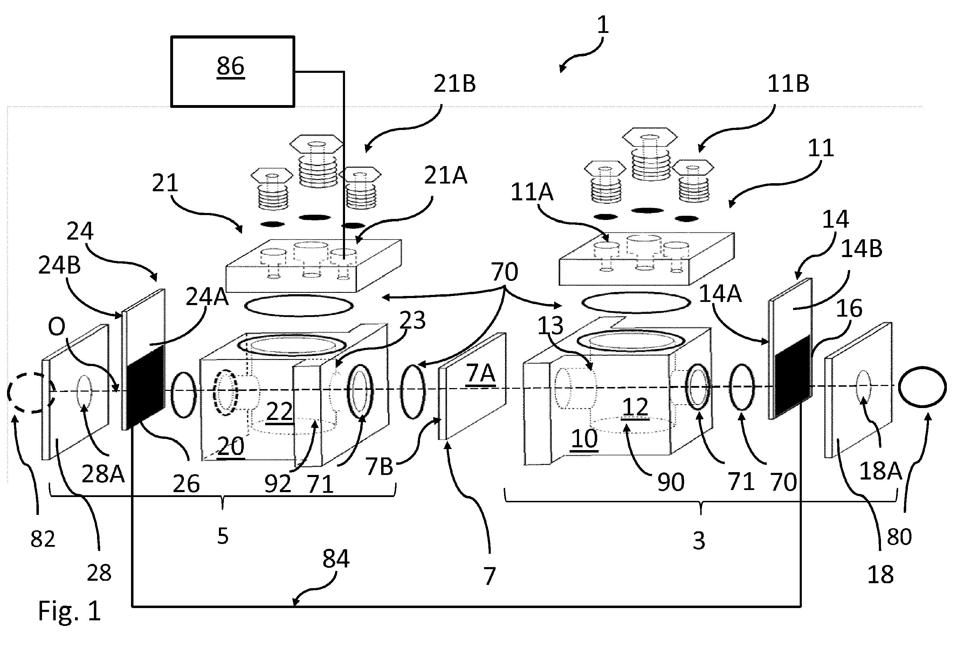

Fig. 1 is a partly exploded perspective and schematic view of a photoelectrochemical cell arrangement in accordance with at least one embodiment of the invention.

### Detailed description of the drawings

Fig. 1 illustrates a photoelectrochemical cell arrangement 1 comprising a first unit 3 and a second unit 5. The first unit 3 comprises a first unit body 10 housing a first chamber 12 for holding a first electrolyte 90, a first light window 14 enabling light to be transmitted into the first chamber 12, a first photoactive electrode 16 arranged to receive the light transmitted through the first light window 14, and a first aperture 18 configured to adjust the amount of light transmitted through the first light window 14. The first unit 3 further comprises a first top cover 11 arranged on the first unit body 10 to at least partly seal the first chamber 12.

In a corresponding manner, the second unit 5 comprises a second unit body 20 housing a second chamber 22 for holding a second electrolyte 92, a second light window 24 enabling light to be transmitted into the second chamber 22, a second photoactive electrode 26 arranged to receive the light transmitted through the second light window 24, and a second aperture 28 configured to adjust the amount of light transmitted through the second light window 24. The second unit 5 further comprises a second top cover 21 arranged on the second unit body 20 to at least partly seal the second chamber 22.

In the photoelectrochemical cell arrangement 1 in Fig. 1, an ion exchange membrane 7 separates the first chamber 12 from the second chamber 22. The ion exchange membrane 7 may e.g. be a proton exchange membrane, or a PEM. More specifically, the ion exchange membrane 7 is in Fig. 1 is shaped as a sheet or cuboid (i.e. a rectangularly shaped prism) having a first membrane side 7A facing the first chamber 12, and a second membrane side 7B facing the second chamber 22. The ion exchange membrane 7 in Fig. 1 also separates the first unit 3 from the second unit 5.

The first and the second light windows 14, 24 have a respective inner side 14A, 24A facing the first and the second chambers 12, 22, respectively. Moreover, the first and the second light windows 14, 24 have a respective outer side 14B, 24B facing the first and the second apertures 18, 28, respectively.

The first chamber 12 is defined by first chamber walls 13. At least a portion of the first chamber walls 13 is comprised in the first unit body 10 (i.e. the first unit body 10 at least partly comprises the first chamber walls 13), and at least a portion of the first chamber walls 13 is comprised in the inner side 14A of the first light window 14 (i.e. the inner side 14A of the first light window 14 at least partly comprises the first chamber walls 13). As seen in Fig. 1, the first chamber walls 13 is furthermore comprised in the first membrane side 7A, and the first top cover 11.

Correspondingly, the second chamber 22 is defined by second chamber walls 23. At least a portion of the second chamber walls 23 is comprised in the second unit body 20 (i.e. the second unit body 20 at least partly comprises the second chamber walls 23), and at least a portion of the second chamber walls 23 is comprised in the inner side 24A of the second light window 24 (i.e. the inner side 24A of the second light window 24 at least partly comprises the second chamber walls 23). As seen in Fig. 1, the second chamber walls 23 is furthermore comprised in the second membrane side 7B, and the second top cover 21.

As shown in Fig. 1, the first photoactive electrode 16 is attached to the first light window 14, and more specifically to the inner side 14A of the first light window 14, such that the first photoactive electrode 16 is configured to be in electrochemical contact with the first electrolyte 90. According to at least one example embodiment, the first photoactive electrode 16 covers the first light window 14, at least at the interface with the first chamber 12, and thus forms a part of the first chamber walls 13 instead of the first light window 14 itself. Correspondingly, the second photoactive electrode 26 is attached to the second light window 24, and more specifically to the inner side 24A of the second light window 24, such that the second photoactive electrode 26 is configured to be in electrochemical contact with the second electrolyte 92. According to at least one example embodiment, the second photoactive electrode 26 covers the second light window 24, at least at the interface with the second chamber 22, and thus forms a part of the second chamber walls 23 instead of the second light window 24 itself.

The first and the second chambers 12, 22 are thus sealed from the surroundings by the first and the second unit body 10, 20, the first and the second light windows 14, 24, and the first and the second top covers 11, 21. However, as previously described, ion exchange between the first and the second chambers 12, 22 are enabled by the ion exchange membrane 7. Moreover, as will be further described below, the first and the second top covers 11, 21 are provided with respective closable openings enabling e.g. a gas measuring device to be connected to the first unit 3 and/or the second unit 5 in order to measure any gas produced in the first and the second chambers 12, 22 respectively.

As illustrated in Fig. 1, suitable sealing units 70, such as O-rings 70 (of which only some are indicated in Fig. 1), are arranged where appropriate, for example between the first top cover 11 and the first unit body 10, as well as between the first unit body 10 and the first light window 14. For other examples of where the O-rings may be arranged, see the corresponding indications in Fig. 1. As also indicated in Fig. 1, each of the sealing unit 70 is associated with a corresponding receiving indention 71 (of which only some are indicated in Fig. 1), configured for receiving the respective sealing unit 70.

As shown in Fig. 1, the photoelectrochemical cell arrangement 1 is comprised of various separate parts, such as e.g. for the first unit 3: the first unit body 10 (comprising the first chamber 12), the first top cover 11, the first light window 14 and the first aperture 18; and for the second unit 5: the second unit body 20 (comprising the second chamber 22), the second top cover 21, the second light window 24 and the second aperture 28. The various separate parts may be separated by suitable sealing units 70, as previously described, and attached to each other by means of suitable attachment elements (e.g. suitable clamping devices, screws or rivets; not shown). This facilitates assembling and disassembling of the photoelectrochemical cell arrangement 1.

As shown in Fig. 1, a first light source 80 and a second light source 82 are arranged on a respective side of the photoelectrochemical cell arrangement 1. Thus, at the photoelectrochemical cell arrangement 1 and at least one of the light sources 80, 82 may be considered as a system.

The first light source 80 is configured to emit light towards said first aperture 18, and through said first light window 14 to said first photoactive electrode 16. Correspondingly, the second light source is configured to emit light towards said second aperture 28, and through said second light window 24 to said second photoactive electrode 26.

Moreover, as the ion exchange membrane 7 is at least partly light transmitting, light transmitted through the first light window 14, pass the first photoactive electrode 16 and into the first chamber 12, may reach the second photoactive electrode 26. Correspondingly, light transmitted through the second light window 24, pass the second photoactive electrode 26 and into the second chamber 22, may reach the first photoactive electrode 16.

According to at least one example embodiment, the ion exchange membrane 7, the first light window 14 and the second light window 24 are aligned on an optical axis O. By such alignment, the light path of the light transmitted through the first light window 14, pass the first photoactive electrode 16, into the first chamber 12, thereafter through ion exchange membrane 7 and to the second photoactive electrode 26, as well as the light path of the light transmitted through the second light window 24, pass the second photoactive electrode 26, into the second chamber 22, thereafter through the ion exchange membrane 7 and to the first photoactive electrode 16, may be better controlled. Hereby, unknown parameters originating from misalignment (such as light scattering or a too large intensity loss) in e.g. the measurement (analysis) or comparison of the material of the photoactive electrodes 16, 26, may be reduced. For the embodiment shown in Fig. 1, where the first unit 3 and the second unit 5 are arranged side-by-side, e.g. on a supporting surface, the ion exchange membrane 7, the first light window 14 and the second light window 24 may be described as being aligned on a horizontal axis.

The fundamental principle behind a photoelectrochemical cell 1 will now be described in further detail, and subsequently more specific applications of the design of the photoelectrochemical cell arrangement 1 of Fig. 1 will be elucidated.

In the below described example, the first electrolyte 90 and the second electrolyte 92 are similar, or the same.

In the below described example the first photoactive electrode 16 comprises a p-type material and the second photoactive electrode 26 comprises an n-type material. The n-type material may e.g. be comprised of, or comprise, an n-type dye or an n-type semiconductor (i.e. electrons are the majority charge carriers and holes the minority charge carriers, the "n" in n-type refers to the negative charge of the electron, e-). The p-type material may e.g. be comprised of, or comprise, a p-type dye or a p-type semiconductor (i.e. holes are the majority charge carriers and electrons the minority charge carriers, the "p" in p-type refers to the positive charge of the hole, h+). Thus, the first photoactive electrode 16 comprising a p-type material may be referred to as a photoactive cathode 16 (or photocathode), and the second photoactive electrode 26 comprising an n-type material may be referred to as a photoactive anode 26 (or photoanode).

Thus, upon illumination (by e.g. the first light source 80) of the first photoactive electrode 16 (i.e. the p-type electrode, or photocathode), an electron is excited (provided that the energy of the photon from the first light source 80 corresponds to the energy gap of the p-type material in first photoactive electrode 16), which can be used to reduce the first electrolyte 90. Depending on the p-type material, the process at the first photoactive electrode 16 may be described differently. For example, if the first photoactive electrode 16 comprises a catalyst cosensitized on e.g. NiO, and a p-type dye sensitized material, the excited state of the p-type dye can inject holes into the valence band of NiO, and the negatively charged p-type dye can reduce the catalyst and (after a multielectron transfer process) thus reduce the first electrolyte 90.

Correspondingly upon illumination (e.g. by the second light source 82) of the second photoactive electrode 26 (i.e. the n-type electrode, or photoanode), an electron is excited (provided that the energy of the photon from the second light source 82 corresponds to the energy gap of the n-type material of the second photoactive electrode 26), which can be transferred to the first photoactive electrode 26 by an electronically connection (e.g. an electric wire). Simultaneously, a hole is generated which may be used to oxidize the second electrolyte 92. Depending on the n-type material, the process at the second photoactive electrode 26 may be described differently. For example, if the second photoactive electrode 26 comprises a catalyst cosensitized on e.g. TiO₂, and an n-type dye sensitized material, the excited state of the n-type dye can inject an electron into the conduction band of TiO₂, and the positively charged n-type dye can oxidise the catalyst and (after a multielectron transfer process) thus oxidize the second electrolyte 92.

As shown in Fig. 1, the first photoactive electrode 16 is electronically connected to the second photoactive electrode 26 by means of a connecting wire 84. Hereby, electrons may be transferred from the second photoactive electrode 26 (i.e. the photoanode) to the first photoactive electrode 16 (i.e. the photocathode). The electron transfer, e.g. in the connecting wire 84, may be measured by for example an ampere meter. The photocurrent may also be detected by means of potentiostat.

As already mentioned, the first and the second top covers 11, 21 comprises respective closable openings 11 A, 21 A (three each is shown in Fig. 1) enabling e.g. a gas measuring device 86 to be connected to the first unit 3 and/or the second unit 5 in order to measure any gas produced in the first and/or the second chambers 12, 22 respectively. Hereby, any gas formed by e.g. reduction of the first electrolyte 90 at the first photoactive electrode (e.g. hydrogen production if the first electrolyte 90 is water, or methane if the first electrolyte 90 comprises carbon dioxide), and oxidation of the second electrolyte 92 at the second photoactive electrode (e.g. oxygen production if the second electrolyte 92 is water). In Fig. 1, the gas measuring device 86 is schematically shown being fluidly connected to one of the closable openings 21 A of the second top cover 21. Moreover, in Fig. 1, each of the closable openings 11A, 21 A is closable by means of respective closing screws 11 B, 21 B.

Thus, the first and/or the second photoactive electrode 16, 26, and/or the first and/or the second electrolyte 90, 92 may evaluated and compared or verified to theoretic calculated values, by measuring the results from the photoelectrochemical cell arrangement 1, e.g. the gas production from the respective catalyst 90, 92 and/or measuring the electron transfer between the second photoactive electrode 26 and the first photoactive electrode 16 (or the photocurrent).

The specific photoelectrochemical cell arrangement 1 of Fig. 1 provides additional advantages to such measurement/evaluation and comparisons, as the number of unknown parameters can be reduced or at least better determined. This will now be further elucidated.

It should be understood that the first aperture 18 may be arranged in a closed state and in various open states. The first aperture 18 thus enables a prices control of the illumination through the first light window 14. It should be understood that the first aperture 18 is configured to adjust the amount of light transmitted through it. Thus, the first aperture 18 has a light-through area 18A (or opening) which may be varied in size, and even closed. In the closed state, the first aperture 18 is configured to prevent light to be transmitted through the first light window 14 and reach the first photoactive electrode 16 via the first light window 14. Correspondingly, the second aperture 28 may be arranged in a closed state and in various open states. The second aperture 28 thus enables a prices control of the illumination through the second light window 24. It should be understood that the second aperture 28 is configured to adjust the amount of light transmitted through it. Thus, the second aperture 28 has a light-through area 28A (or opening) which may be varied in size, and even closed. In the closed state, the second aperture 28 is configured to prevent light to be transmitted through the second light window 24 and reach the second photoactive electrode 26 via the second light window 24.

Hereby, assuming that the first and the second light sources 80, 82 are active (i.e. emitting light), the light transmitted to the first and the second photoactive electrodes 16, 26 may be controlled by the first and the second apertures 18, 28. For example, in a first configuration, both the first and the second apertures 18, 28 are arranged in a equal open state (i.e. the light-through areas are the same) in which the first photoactive electrode 16 mainly receives light through the first light window 14 (and secondly by light transmitted through the ion exchange membrane 7), while the second photoactive electrode 26 mainly receives light through the second light window 24 (and secondly by light transmitted through the ion exchange membrane 7). In a second configuration, the first aperture is arranged in a closed state while the second aperture is arranged in an open state, allowing light to be transmitted there-through. In such configuration the first photoactive electrode 16 only receives light through the ion exchange membrane 7, and the second photoactive electrode 26 only receives light through the second light window 24. In a third configuration, the first aperture is arranged in an open state, allowing light to be transmitted there-through while the second aperture is arranged in a closed state. In such configuration the first photoactive electrode 16 only receives light through the first light window 14, and the second photoactive electrode 26 only receives light through the ion exchange membrane 7.

As the degree of opening of the respective aperture 18, 28, and the configuration (e.g. the first, second or third configuration as stated above) may be combined in various ways, the photoelectrochemical cell arrangement 1 of Fig. 1 may be advantageously used to vary the conditions of the cell 1 and thus provide a more versatile testing equipment. The present photoelectrochemical cell arrangement 1 also enables the use of simple light sources, as the need of having a light source with a variable light intensity is reduced. However, the photoelectrochemical cell arrangement 1 may according to one example embodiment be combined with light sources providing a variable light intensity.

Thus, by varying the configuration (e.g. the first, second or third configuration as stated above; as well as the degree of opening 18A, 28A of the respective aperture 18, 28) and measuring the results (e.g. the gas production from the respective catalyst 90, 92 and/or measuring the electron transfer between the second photoactive electrode 26 and the first photoactive electrode 16 (or the photocurrent) as described previously), and evaluating and comparing the measured results with theoretic calculated values, the material of the fist and/ or photoactive electrodes 16, 26 may be investigated in a more reliable manner.

The skilled person realizes that a number of modifications of the embodiments described herein are possible without departing from the scope of the invention, which is defined in the appended claims.

For instance, the invention is not limited to the number of electrodes, but more electrodes may be used. For example, if the material of only one of the photoactive electrodes 16, 26 is to be evaluated, a reference electrode may be arranged in the first or second chamber 12, 22. The reference electrode may e.g. be inserted through one of the closable openings 11 A, 21 A in the first or second top cover 11, 21. Moreover, other measuring devices may be added to the photoelectrochemical cell arrangement 1 for measuring of other parameters. The photoelectrochemical cell arrangement 1 may also comprise more than two units.

## Claims

1. A photoelectrochemical cell arrangement comprising:
a first unit comprising a first chamber for holding a first electrolyte, a first light window enabling light to be transmitted into said first chamber, a first photoactive electrode arranged to receive the light transmitted through said first light window, and a first aperture configured to adjust the amount of light transmitted through said first light window;
a second unit comprising a second chamber for holding a second electrolyte, a second light window enabling light to be transmitted into said second chamber, a second photoactive electrode arranged to receive the light transmitted through said second light window, and a second aperture configured to adjust the amount of light transmitted through said second light window;
an ion exchange membrane separating said first chamber from said second chamber, said ion exchange membrane being at least partly light transmitting to enable light transmitted through said first light window to reach said second photoactive electrode, and to enable light transmitted through said second light window to reach said first photoactive electrode;
wherein said first photoactive electrode is attached to said first light window, and is configured to be in electrochemical contact with the first electrolyte, and wherein said second photoactive electrode is attached to said second light window, and is configured to be in electrochemical contact with the second electrolyte.

2. The photoelectrochemical cell arrangement according to claim 1, wherein said ion exchange membrane, said first light window and said second light window are aligned on an optical axis.

3. The photoelectrochemical cell arrangement according to claim 1 or 2, wherein said first photoactive electrode is attached to said first light window and/or said second photoactive electrode is attached to said second light window by a sputtering technique, by sintering or by sensitization.

4. The photoelectrochemical cell arrangement according anyone of the preceding claims, wherein said first chamber is defined by first chamber walls, and wherein at least a portion of said first chamber walls is defined by said first light window.

5. The photoelectrochemical cell arrangement according anyone of the preceding claims, wherein said second chamber is defined by second chamber walls, and wherein at least a portion of said second chamber walls is defined by said second light window.

6. The photoelectrochemical cell arrangement according anyone of the preceding claims, wherein said first chamber and said second chamber are sealed.

7. The photoelectrochemical cell arrangement according anyone of the preceding claims, wherein said first aperture, in a closed state, is configured to prevent light to be transmitted through said first light window, and wherein said second aperture, in a closed state, is configured to prevent light to be transmitted through said second light window.

8. The photoelectrochemical cell arrangement according to any one of the preceding claims, wherein said first photoactive electrode comprises a p-type material and said second photoactive electrode comprises an n-type material.

9. The photoelectrochemical cell arrangement according to any one of the preceding claims, wherein said ion exchange membrane is a proton exchange membrane.

10. The photoelectrochemical cell arrangement according to any one of the preceding claims, wherein said first photoactive electrode is electronically connected to said second photoactive electrode, preferably by means of a connecting wire.

11. The photoelectrochemical cell arrangement according to any one of the preceding claims, further comprising a gas measurement unit fluidly connected to said first chamber and/or said second chamber.

12. The photoelectrochemical cell arrangement according to any one of the preceding claims, wherein said first photoactive electrode comprises a dye sensitized material and/or said second photoactive electrode comprises a dye sensitized material.

13. A system comprising a photoelectrochemical cell arrangement according to any one of claims 1-12, and a light source configured to emit light to said first aperture and/or said second aperture.
